# EUROPÄISCHE PATENTSCHRIFT

(11) **EP 1 534 554 B1**
(45) Veröffentlichungstag und Bekanntmachung des Hinweises auf die Patenterteilung: **11.07.2007**
(21) Anmeldenummer: 03747805.4
(22) Anmeldetag: 19.08.2003
(51) Int. Cl.: B60W 30/18, B60W 50/06

(54) **ANTRIEBSSTRANG EINES KRAFTFAHRZEUGS UND VERFAHREN ZUM STEUERN EINES ANTRIEBSSTRANGS**
DRIVE TRAIN OF A MOTOR VEHICLE AND METHOD FOR CONTROLLNG A DRIVE TRAIN
CHAINE DE TRANSMISSION DE VEHICULE AUTOMOBILE ET PROCEDE POUR COMMANDER UNE CHAINE DE TRANSMISSION

(30) Priorität: 04.09.2002 DE 10240901
(43) Veröffentlichungstag der Anmeldung: 01.06.2005
(73) Patentinhaber: SIEMENS AKTIENGESELLSCHAFT, 80333 München (DE)
(72) Erfinder: PROBST, Gregor, 84028 Landshut (DE); NELLES, Oliver, 57080 Siegen (DE); RAMPELTSHAMMER, Martin, 93055 Regensburg (DE); DEIML, Matthias, 93093 Regenstauf (DE)
(86) Internationale Anmeldenummer: PCT/DE2003/002761
(87) Internationale Veröffentlichungsnummer: WO 2004/024490

(56) Entgegenhaltungen:
- EP-A- 0 178 439
- EP-A- 0 576 703
- EP-A- 0 989 012
- WO-A-02/063163
- DE-A- 10 035 027
- DE-A- 19 532 124
- FR-A- 2 796 893

## Beschreibung

Die Erfindung betrifft ein Verfahren nach dem Oberbegriff von Anspruch 1 und einen Antriebsstrang nach dem Oberbegriff von Anspruch 3. Das Verfahren dient zum Steuern des Antriebsstrangs eines Kraftfahrzeugs mit einem Antriebsstrangmanagement, das eine Schaltung aufweist, in der Aktionen des Fahrers ausgewertet und als gewünschtes Verhalten des Antriebsstrangs erfasst und zusammen mit der jeweiligen Fahrsituation gespeichert werden, und das individuell an den Fahrer des Kraftfahrzeugs angepasst wird.

Bei einer bekannten Getriebesteuerung (EP-A 0 576 703 A1), welche die Merkmale des Oberbegriffs von Anspruch 1 und 3 aufweist, werden die Gänge abhängig von der Fahrpedalstellung und der Fahrzeuggeschwindigkeit anhand von gespeicherten Schaltkennfeldern automatisch geschaltet. Außerdem wird der Lastzustand des Kraftfahrzeugs und der Fahrstil des Fahrers berücksichtigt. Durch einen Fuzzy-Logik-Regler werden verschiedene Signale, die Betriebszustände des Kraftfahrzeugs melden, ausgewertet, und daraufhin werden folgende Steuersignale erzeugt: ein den Fahrzeug-Lastzustand kennzeichnendes Stellsignal und ein den Fahrstil kennzeichnendes Stellsignal. Diese bewirken eine Schaltkennfeld-Umschaltung. Außerdem wird ein Sperrsignal erzeugt, das Schaltungen verhindert, die einen dynamisch ungünstigen Fahrzustand (z. B. eine zu starke Querbeschleunigung) ergeben würden.

Bei einem bekannten Kraftübertragungssteuergerät und Steuerverfahren für einen Personenkraftwagen mit einem Motor und einem automatischen Getriebe (DE 195 32 124 A) erfassen Steuersensoren den laufenden Betriebszustand des Personenwagens. Drei verschiedene Betriebsmodi werden vom Fahrer gewählt, und je nach dem gewählten Modus wird das Fahrzeuggetriebe mit unterschiedlichen Gangwechselmustern als Funktion der erfassten Fahrzeugbetriebszustände gesteuert. Eine Gangwechsellinien-Steuerfunktion setzt den Anfangszeitpunkt von Gangwechselschritten fest, eine Schaltzeitpunktslinien-Steuerfunktion die Dauer der Gangwechselschritte. Der Fahrer gibt seine Absicht, "den Modus der Fahrerabsichts-Vorhersagevorrichtung gemäß den verschiedenen bevorzugten Ausführungsformen der Erfindung zu wählen", manuell ein.

Ein anderer bekannter Antriebsstrang eines Kraftfahrzeugs mit einem Motor, einem Kurbelwellenstartergenerator, einen hydrodynamischen Drehmomentwandler und einem automatischen Getriebe weist eine übergeordnete Antriebsstrangsteuerung auf, die eine Fahrer- und Situationserkennung, eine Zustandssteuerung und ein Drehmomentmanagement enthält. Sie führt folgende Funktionen durch: einen Start-Stopp-Betrieb, eine Verstärkung des Motordrehmoments, ein Rollen des Kraftfahrzeugs bei nicht kraftschlüssigem Antriebsstrang und einen regenerativer Bremsbetrieb (PCT/DE02/04559).

Bei einem weiteren bekannten Verfahren zum Steuern des Antriebsstrangs eines Kraftfahrzeugs wird der Verbrennungsmotor nach Ablauf einer festgelegten Wartezeit abgeschaltet, wenn während der Wartezeit nach einem Öffnen des Antriebsstrangs weder ein Antriebsmoment noch ein Bremsmoment von dem Verbrennungsmotor angefordert wird (PCT/DE02/04559).

Wesentlicher Bestandteil eines modernen Antriebsstrangs ist das Antriebsstrangmanagement. Es koordiniert alle Komponenten, die die Längsdynamik eines Kraftfahrzeuges beeinflussen. Zu diesen Komponenten gehören u.a. ein Verbrennungsmotor, ein Starter-Generator, eine Batterie, wahlweise auch Kondensatoren oder andere Energiespeicher, eine Bremsanlage, sowie alle elektrischen Aggregate und alle am Keilriemen hängenden Nebenaggregate sowie das Getriebe. Wünschenswert ist es, das Antriebsstrangmanagement an die Wünsche und Gewohnheiten des einzelnen Fahrers anzupassen.

Bislang werden nur unterschiedliche Kalibrationsdaten für verschiedene Märkte (Europa, Nord-Amerika, Asien) verwendet, die auf einen "typischen" Fahrer in diesem Markt zugeschnitten sind. Eine individuelle Anpassung an den Geschmack und die Erwartungen jedes einzelnen Fahrers findet nicht statt. Ein typisches Beispiel für den Nachteil einer fehlenden Individualisierung ist das Verhalten nach einer schnellen Gaspedal-Wegnahme durch den Fahrer. Manche Fahrer bevorzugen das sogenannte Segeln (ein Öffnen der Kupplung vermindert den Fahrwiderstand und lässt das Auto länger rollen), andere Fahrer bevorzugen eine stärkere Verzögerung des Autos, die ein Regenerieren, das heißt ein Rückgewinnen von Energie (und Aufladen des Energiespeichers aus der Bewegungsenergie des Autos) ermöglicht. Beide Vorgehensweisen ermöglichen es, insgesamt Energie zu sparen, aber das Fahrverhalten ist deutlich unterschiedlich. Bislang musste immer eine der möglichen Vorgehensweisen fest implementiert werden, wodurch Kundengruppen mit einer anderen Präferenz möglicherweise abgeschreckt wurden.

Der Erfindung liegt die Aufgabe zu Grunde, ein Verfahren zum Steuern eines Antriebsstrangs und einen solchen Kraftfahrzeug-Antriebsstrang zu schaffen, die ein individuelles Anpassen des Antriebsstrangmanagements durch und an den Fahrer ermöglichen.

Diese Aufgabe wird erfindungsgemäß durch ein Verfahren nach Anspruch 1 und durch einen Antriebsstrang nach Anspruch 3 gelöst. Dazu werden durch den Fahrer Daten, mit denen das Steuerverhalten des Antriebsstrangmanagements an Fahrerwünsche angepasst wird, über eine Schnittstelle eingegeben, wird bei wiederholtem Auftreten des gleichen Fahrverhaltens in derselben Fahrsituation das Antriebsstrangmanagement an das durch die Daten vorgegebene Verhalten angepasst, und führt das Antriebsstrangmanagement, falls das selbe oder ein zumindest ähnliches Fahrerverhalten häufig als Reaktion auf die selben oder ähnliche Situationen (konsistentes Verhalten) beobachtet wird, eine Lernfunktion durch, wobei es zugehörige Parameter oder Zustandsdaten des Antriebsstrangs in Anpassung an das Fahrerverhalten verändert.

Die genannte Aufgabe wird bei einem Antriebsstrang eines Kraftfahrzeugs erfindungsgemäß auch durch ein Verfahren gelöst, bei dem das Antriebsstrangmanagement individuell an den Fahrer des Kraftfahrzeugs angepasst wird.

Zweckmäßige Weiterbildungen der Erfindung sind in den Unteransprüchen niedergelegt.

Die Vorteile der Erfindung liegen insbesondere darin, dass jeder Fahrer explizit durch Einstellen von Parametern oder implizit durch sein Fahrverhalten die Strategie und die Parameter der integrierten Antriebsstrangsteuerung an seine Ansprüche, Erwartungen und Vorlieben anpassen kann. Durch diese Individualisierung wird mit der erfindungsgemäßen Antriebsstrangsteuerung eine deutlich erhöhte Kundenzufriedenheit und -akzeptanz erreicht.

Ausführungsbeispiele der Erfindung werden im folgenden anhand der Zeichnungen erläutert. Es zeigen:
- Figur 1: einen Antriebsstrang gemäß der Erfindung in schematischer Darstellung;
- Figuren 2A-2D: das Ablaufdiagramm eines Programms, das in dem Antriebsstrang nach Figur 1 bei einer lernenden Funktion "Segeln und Regenieren" abgearbeitet wird;
- Figur 3: Tabellen mit verschiedenen in dem Programm nach Figur 2 verwendeten Parametern und Zahlenwerten, und
- Figuren 4A+4B: das Ablaufdiagramm eines Programms, das in dem Antriebsstrang nach Figur 1 bei einer lernenden Funktion "Start-Stopp" abgearbeitet wird, einschließlich der darin verwendeten Parameter und Zahlenwerte.

Ein Antriebsstrang AS eines Kraftfahrzeuges weist auf einen Verbrennungsmotor 1, der herkömmlich aufgebaut ist und der deshalb nur schematisch dargestellt ist. Der Verbrennungsmotor 1 wird dabei durch eine elektronische Motorsteuerung (EMS) 2 gesteuert, die auch die Funktion einer elektronischen Drosselklappenregelung (ETC) übernehmen kann. Ausgangsseitig ist der Verbrennungsmotor 1 über eine Welle mit einem Elektromotor in Form eines integrierten Startergenerators (ISG) 3 verbunden, durch welchen bei laufendem Verbrennungsmotor 1 ein Energiespeicher 4, zum Beispiel in Form einer Batterie, geladen werden kann. Der Energiespeicher 4 kann aber ebenso als Brennstoffzelle oder als Hochleistungs-Kondensator (in Form von sogenannten UltraCaps) ausgebildet sein.

Bei einem stillstehenden Verbrennungsmotor 1 andererseits kann der integrierte Startergenerator 3 zum Anlassen verwendet werden. Er ist dabei hier als Asynchronmaschine ausgebildet, er kann aber auch als Synchronmaschine oder Gleichstrommotor ausgebildet sein. Gesteuert wird der integrierte Startergenerator 3 durch eine ISG-Steuereinheit (ISGS) 5. Zwischen dem Verbrennungsmotor 1 und dem integrierten Startergenerator 3 kann eine hier nicht dargestellte Kupplung angeordnet sein, die es ermöglicht, den Verbrennungsmotor 1 von dem Rest des Antriebsstrangs AS abzutrennen. Dies ermöglicht eine Entkopplung der Drehzahl des integrierten Startergenerators 3 von dem Verbrennungsmotor 1, wodurch die Verluste erzeugende Bremswirkung des Verbrennungsmotors 1 ausgeschaltet und die elektrisch nutzbare Bremswirkung des Startergenerators 3 verbessert wird.

Weiterhin ist in dem Antriebsstrang AS eine Kupplung 6 angeordnet, durch die der Verbrennungsmotor 1 und der integrierte Startergenerator 3 mit einem Getriebe 7 verbunden und von diesem getrennt werden können. Die Kupplung 6 ist je nach Fahrzeugkonfiguration beispielsweise als Trockenkupplung oder auch als Wandlerüberbrückungskupplung ausgeführt. Die Kupplung 6 und das Getriebe 7 werden von einer elektronischen Getriebesteuerung (EGS) 8 gesteuert, wobei die elektronische Getriebesteuerung 8 verschiedene Übersetzungsverhältnisse des Getriebes 7 einstellen kann. Das Umschalten zwischen den verschiedenen Übersetzungsverhältnissen erfolgt durch die elektronische Getriebesteuerung 8 automatisch, indem diese die Kupplung 6 und die hier nicht dargestellten Aktuatoren des Getriebes 7 steuert. Alternativ zu einem Getriebe mit festen Gangstufen kann auch ein Getriebe mit kontinuierlich einstellbarem Übersetzungsverhältnis verwendet werden. Das Getriebe 7 kann als konventionelles Automatikgetriebe mit Planetenradsatz, als automatisiertes (automatisches) Handschaltgetriebe oder als Doppelkupplungsgetriebe ausgeführt sein.

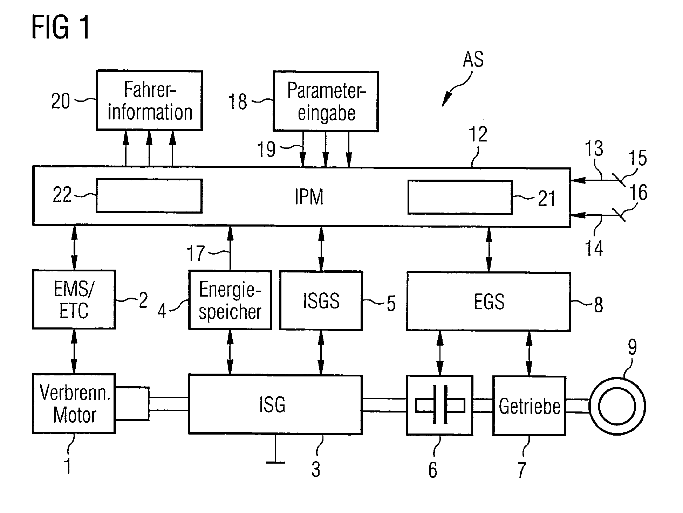

Der Antriebsstrang ist über ein nicht dargestelltes Differential mit den Rädern 9 des Kraftfahrzeugs verbunden, von denen in der Figur 1 nur eines dargestellt ist. Ein systemübergreifendes Antriebsstrangmanagement (IPM) 12 empfängt als Eingangssignale über Leitungen 13 und 14 Signale, die den Fahrerwunsch bezüglich eines Antriebsmoments und eines Bremsmoments charakterisieren. Diese Signale können beispielsweise durch Auswerten der Stellungen eines Fahrpedals 15 und eines Bremspedals 16 gewonnen werden. Dem Antriebsstrangmanagement 12 wird auch über eine Leitung 17 ein Signal übermittelt, das den Ladezustand des Energiespeichers 4 charakterisiert.

Weitere Signale werden dem Antriebsstrangmanagement 12 von symbolisch zu einem Block zusammengefassten Sensoren 18 und eventuell auch Daten aus den dezentralen Steuereinrichtungen 2, 5 und 8 oder aus externen Signalquellen, zum Beispiel von einem GPS-Empfänger, oder auch Daten aus Navigationssystemen zugeführt, die eine vollständige Ermittlung der aktuellen Betriebssituation ermöglichen. Diese Daten gelangen über eine Schnittstelle 19 zu dem Antriebsstrangmanagement 12. Von diesem wiederum werden Informationen für den Fahrer an eine Anzeigeeinheit (im folgenden auch: Fahrerinfosystem) 20 ausgegeben. Das Antriebsstrangmanagement 12 enthält eine Adaptionseinrichtung 21, durch die das Steuerverhalten des Antriebsstrangs AS - wie noch erläutert werden wird - an den jeweiligen Fahrer des Kraftfahrzeugs angepasst wird.

In einer Situations-Erkennungsschaltung 22 werden eine Reihe von Eingangssignalen ausgewertet und daraus Kenngrößen und Parameter berechnet, die für den Fahrzustand des Kraftfahrzeugs, das Verhalten des Fahrers und den Betriebs-Modus des Antriebsstrangs charakteristisch sind. Eine solche Erkennungsschaltung ist in der Druckschrift WO 02/063163 A1 beschrieben.

Abhängig von den zugeführten Signalen führt das Antriebsstrangmanagement 12 eine koordinierte Berechnung der zentralen Betriebsparameter des Antriebsstrangs AS durch. So werden im Antriebsstrangmanagement 12 zum Beispiel Getriebeübersetzungen und Soll-Drehmomente für die Antriebsaggregate, aber auch Antriebsart und Betriebspunkte festgelegt. Diese Informationen werden den dezentralen Steuerungen oder Steuereinrichtungen 2, 5 und 8 in Form von Steuersignalen zugeführt. Die Steuerungen oder Steuereinrichtungen 2, 5 und 8 erzeugen daraufhin Stellsignale für die einzelnen Aggregate oder Bestandteile des Antriebsstrangs AS.

Das Antriebsstrangmanagement 12 ist in der Figur 1 als eigenständige Steuereinheit dargestellt, kann aber ebenso in eine oder mehrere der dezentralen Steuerungen oder Steuereinrichtungen 2, 5 oder 8 integriert sein. Auch die dezentralen Steuereinrichtungen 2, 5 und 8 sind als eigenständige Steuereinheiten dargestellt, sie können aber in beliebiger Art und Weise kombiniert in einem oder mehreren multifunktionalen Steuergeräten untergebracht werden.

Von dem Verbrennungsmotor 1 kann sowohl ein Antriebs- als auch ein Bremsmoment, letzteres insbesondere für Bremsassistenzfunktionen, angefordert werden. Des Weiteren kann der Verbrennungsmotor auch ein Drehmoment zum Betreiben von Nebenaggregaten, zum Beispiel einer Klimaanlage, liefern.

Das Antriebsstrangmanagement 12 kann erfindungsgemäß durch den Fahrer individuell angepasst werden. Eine derartige Individualisierung erfolgt zum einen, indem der Fahrer explizit Daten, Parameter oder Zustandsinformationen, zum Beispiel über ein Infotainmentsystem, durch Spracheingabe etc. über die Schnittstelle 19 eingibt.

Die Individualisierung kann zum anderen auch indirekt durch das Fahrerverhalten erfolgen. Situationsabhängig werden ausgewählte Fahrerreaktionen - Gasgeben, Bremsen, "Plus-" oder "Minus"-Tasten oder einen Hebel betätigen etc. - als ein Fahrerwunsch bezüglich des Antriebsstrangmanagements interpretiert. Wird das selbe oder ein zumindest ähnliches Fahrerverhalten sehr häufig als Reaktion auf die selben oder ähnliche Situationen beobachtet - ein sogenanntes konsistentes Verhalten -, so lernt das Antriebsstrangmanagement 12 daraus, indem es entsprechende Parameter oder Zustandsdaten verändert oder umkonfiguriert. Nachfolgend werden konkrete Beispiele hierfür beschrieben.

Das Lernen des Antriebstrangmanagements wird dadurch robuster, das heißt gegen zufällige Schwankungen unempfindlicher gemacht, dass die Anforderungen an das Fahrerverhalten umso anspruchsvoller werden, je mehr das Antriebsstrangmanagement in der Vergangenheit schon gelernt hat. Dies bedeutet, dass das Fahrerverhalten immer eindeutiger und über einen längeren Zeitraum auf einen Änderungswunsch hindeuten muss, bis eine Rekonfiguration des Steuerverhaltens oder ein Lernschritt durchgeführt wird. Beispielsweise wird anfangs gefordert, dass der Fahrer in zehn ähnlichen Situationen mindestens sechs Mal in ähnlicher Weise reagiert. Wenn dies dann erfolgt ist, wird für den nächsten Schritt eine "Konsistenzquote" von 14 aus 20, dann von 24 aus 30, danach von 36 aus 40 und so weiter gefordert.

Eine solche Vorgehensweise des Antriebsstrangmanagements 12 "friert" das gelernte Verhalten immer weiter ein und stellt zunehmend höhere Anforderungen an ein Umlernen. Damit stabilisiert sich das Fahrverhalten immer weiter. Schließlich ist ein Umlernen fast nur noch durch einen Reset auf die Ausgangs- oder Default-Kalibration möglich, die auch die Lernfähigkeit wieder auf ihre Anfangswerte zurücksetzt.

Bei den folgenden Ausführungsbeispielen werden eine Segeln-Regenerieren-Funktion und die Start-Stopp-Automatik des Antriebsstrangs AS konfiguriert. Es wird zum Beispiel die Zeit zwischen Fahrzeugstillstand und Stopp des Verbrennungsmotors als Parameter eingestellt. Dies kann über die direkte Eingabe einer Zeitspanne zwischen einem Minimal- und Maximalwert geschehen. Das Drücken einer Minus-Taste, das Ziehen eines Hebels oder ähnliches wird als Wunsch des Fahrers, den Verbrennungsmotor zu stoppen, interpretiert. Das Drücken einer Plus-Taste, das Loslassen der Bremse oder das Niederdrücken des Gaspedals wird als Wunsch den Verbrennungsmotor wieder zu starten interpretiert. Die Zeit zwischen einem Fahrzeugstillstand und dem Stopp des Verbrennungsmotors wird bei Drücken der Minustaste - während der Verbrennungsmotor noch läuft, das Fahrzeug aber schon still steht - um einen vorgegebenen Wert reduziert. Umgekehrt wird die Zeit verlängert, wenn ein Wunsch den Verbrennungsmotor zu starten kurz, zum Beispiel durch eine kalibrierbare Zeitspanne definiert, nach einem Stopp des Verbrennungsmotors beobachtet wird.

Erweiternd werden situationsabhängig verschiedene Zeiten festgelegt, die jeweils die Zeitspanne zwischen Fahrzeugstillstand und Verbrennungsmotorstopp in einer vorgegebenen Situation beschreiben. Dann werden mehrere derartige Zeiten unabhängig voneinander eingestellt oder gelernt. Diese spezifischen Situationen müssen dazu aber zuverlässig mittels einer Situationserkennung festgestellt werden. Als solche Situationen kommen u.a. in Frage: Parkmodus, Ampel, Bahnübergang, Abbiegewunsch, Verkehrsdichte, Status des Energiemanagements (Zustand der Batterie und/oder des Kondensators). Aus der Druckschrift WO 01/063163 A1 ist es schon bekannt, vorgegebene Parameter für das sogenannte Segeln - bei geöffneter Kupplung - von der jeweiligen Situation abhängig zu machen, die durch eine Situationserkennung erfasst wird. Allerdings wird in der selben Situation immer wieder die selbe Aktion ausgelöst - unabhängig von dem Fahrerwunsch -; das bekannte Verfahren ist also nicht lernfähig.

Bei einem weiteren Ausführungsbeispiel wird das Verhalten des Antriebsstrangmanagements AS im Anschluss an ein Loslassen des Gaspedals konfiguriert. Möglich sind folgende Reaktionen:
a) Segeln, das heißt ein Öffnen der Kupplung,
b) einen Gang hochschalten, wenn die Rückschaltkennlinie überschritten wird,
c) einen Gang halten auch wenn die Rückschaltkennlinie überschritten wird (sogenannte SAT-Funktionen: Fast-off & Deceleration),
d) Regenerieren - kann in seiner Stärke kontinuierlich zwischen vorgegebenen Extremwerten eingestellt werden.

Der Fahrer kann die von ihm gewünschte Reaktion einstellen und im Fall der Reaktionsalternative d) die Stärke der Regeneration angeben. Die von dem Fahrer gewünschte Reaktion kann wie erwähnt auch aus seinem Verhalten geschlossen und damit langfristig gelernt werden. Da die Verzögerungswirkung der Reaktionen von a) bis d) immer weiter zunimmt, kann ein Bremsen in dieser Situation als ein Wunsch nach mehr Verzögerung und damit in Richtung von Reaktion d) interpretiert werden. Umgekehrt kann ein Gasgeben als ein Wunsch nach weniger Verzögerung und damit in Richtung von Reaktion a) interpretiert werden.

Wird also nach einem Loslassen des Gaspedals in signifikant häufiger Weise (durch einen Kalibrationswert definiert) mit einem Tritt auf die Bremse reagiert, wird von der Reaktion a) nach b), oder von b) nach c), oder von c) nach d) gewechselt. Ist schon die Reaktion d) konfiguriert, wird die Stärke der Regenerierung erhöht. Genau Umgekehrtes gilt, wenn in konsistenter Weise nach dem Loslasen des Gaspedals gleich wieder Gas gegeben wird.

Bei einem weiteren Ausführungsbeispiel wird die Bremsassistenz-Funktion, das heißt das Unterstützen der Bremswirkung der Bremse mit einer erhöhten Motorbremswirkung (in einem niedrigeren Gang) und/oder mit einer Bremswirkung des Generators (durch Rückgewinnen von Energie) konfiguriert.

Das Anfahren des Fahrzeugs wird zum Beispiel durch ein Anfahren im 1. oder im 2. Gang - mit oder ohne Unterstützung des Elektromotors 3 - konfiguriert.

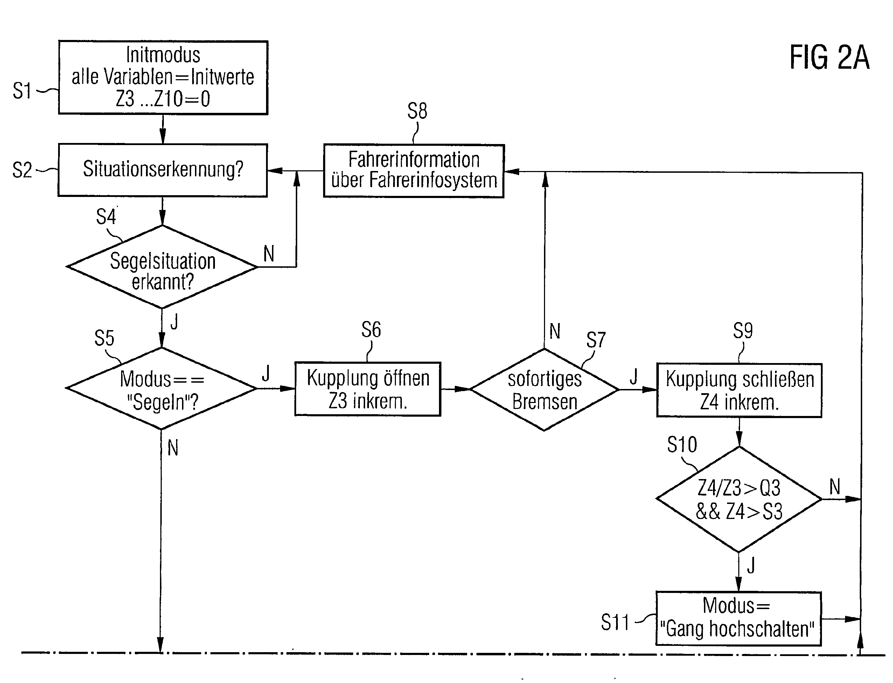

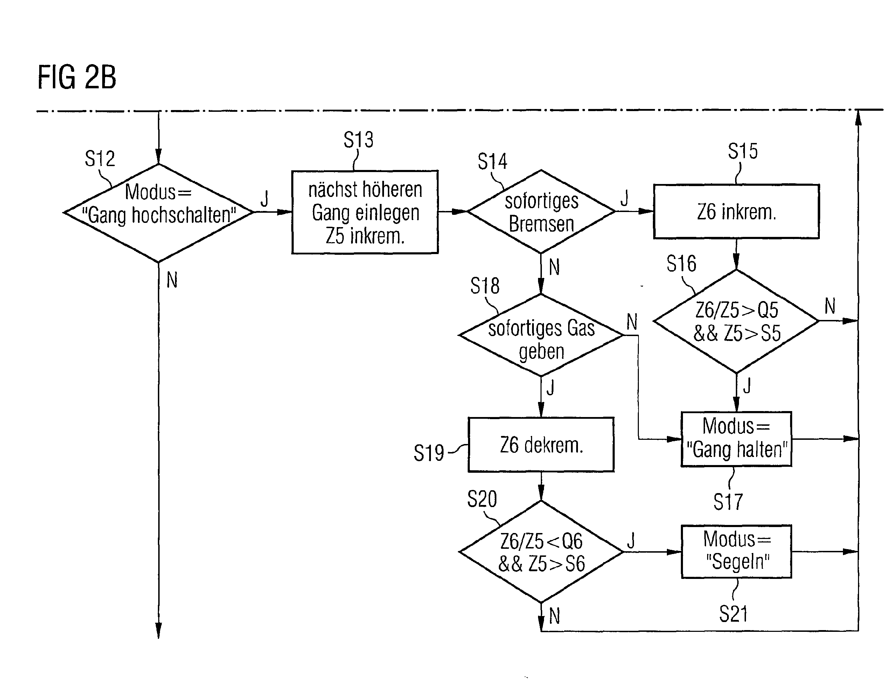

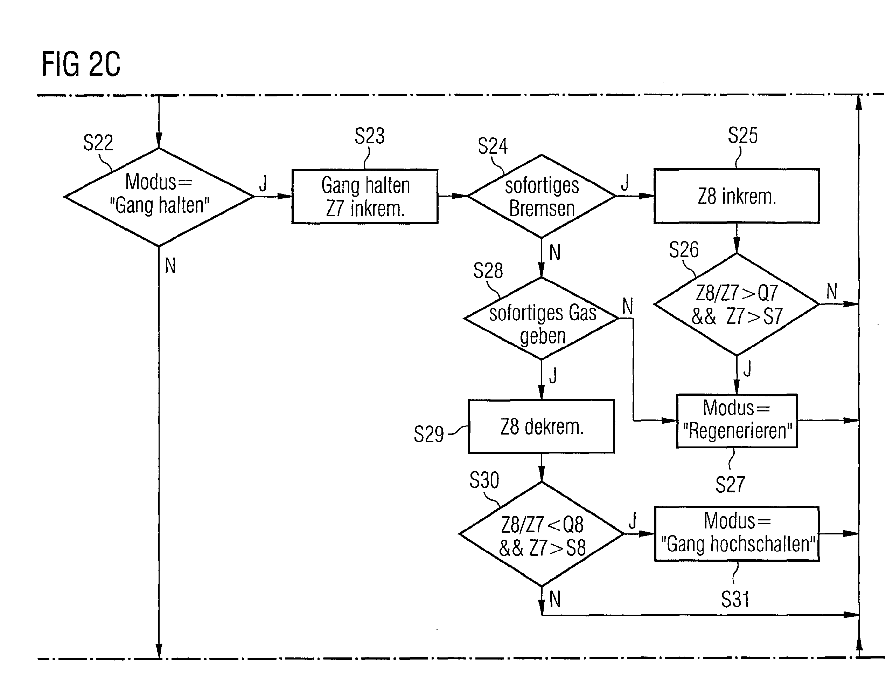

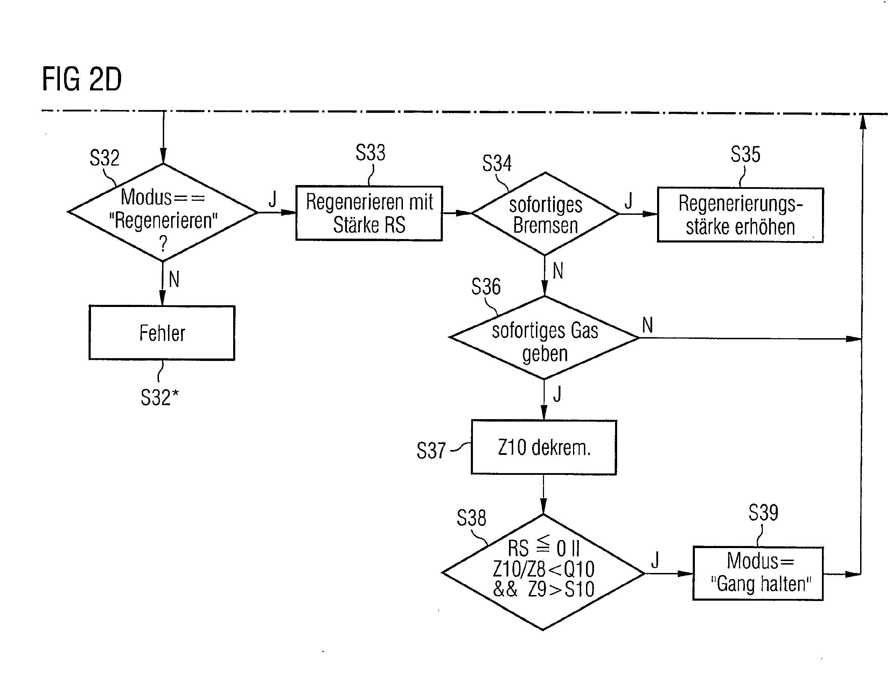

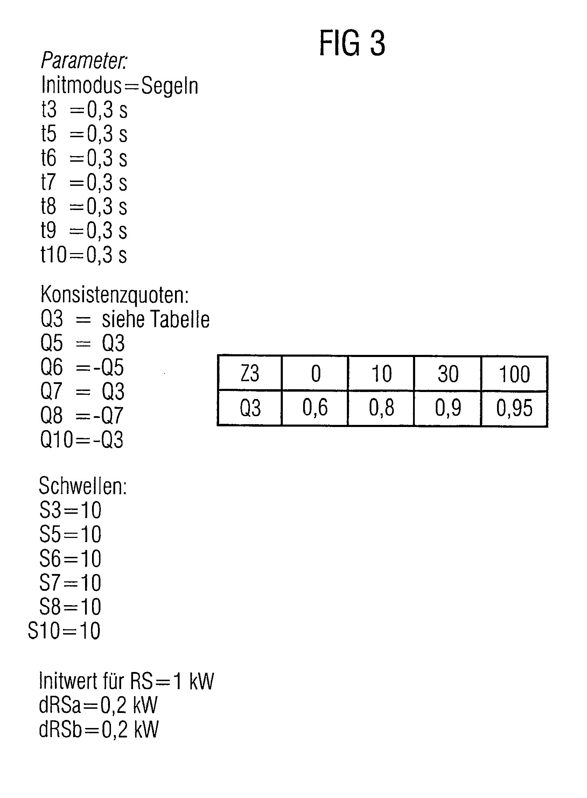

Das aus den Figuren 2A bis 2D ersichtliche Ablaufdiagramm eines Programms (Algorithmus) für den Antriebsstrang wird in dem Antriebsstrangmanagement 12 als lernende Funktion "Segeln und Regenieren" abgearbeitet. Die Figuren 2B, 2C und 2D sind Fortsetzungen der Figur 2A, sie schließen sich jeweils unten an die vorherige Figur an. Das Programm umfasst folgende Schritte:
- S1: Bei einem Start des Programms werden alle Variablen in einem Initmodus auf ihre Initwerte und alle Zählerwerte Z3 bis Z10 auf Null gesetzt.
Anmerkungen: die Ausdrücke Initmodus und Initwerte sind Kurzformen der Ausdrücke Initial- oder Ausgangsmodus beziehungsweise Initial- oder Ausgangswerte. Die Zählerwerte Z3 bis Z10 sind durch das Programm gesetzte Zählerwerte.
In einem Schritt
- S2: wird eine Erkennung der Fahrsituation durchgeführt. In einem Schritt
- S3: erfolgt eine Abfrage, ob eine Situation "Segeln" erkannt worden ist, das heißt, ob die Fahrzeuggeschwindigkeit über einer vorgegebenen Schwelle liegt und die Auslenkung des Gaspedals 0% beträgt. Ist die Antwort nein, erfolgt ein Rücksprung zu dem Schritt S2. Ist die Antwort ja, wird in einem Schritt
- S5: abgefragt, ob der Antriebsstrang sich in dem Modus Segeln befindet. Ist die Antwort ja, wird in einem Schritt
- S6: die Kupplung 6 geöffnet und ein Zählerwert Z3 inkrementiert. Danach wird in einem Schritt
- S7: abgefragt, ob sofortiges Bremsen erfolgt ist, und zwar in einer Zeitspanne seit dem Öffnen der Kupplung kleiner als t3. Ist die Antwort nein, erfolgt ein Sprung zu einem Schritt
- S8: Darin wird der Fahrer mit der Anzeigeeinheit über die Fahrsituation informiert und danach wird zu dem Schritt S2 rückgesprungen.
Ist die Antwort auf die Abfrage S7 ja, wird in einem Schritt
- S9: die Kupplung geschlossen und ein Zählerwert Z4 inkrementiert. In einem Schritt
- S10: wird abgefragt, ob der Zählerwert Z4 geteilt durch den Zählerwert Z3 größer als eine Konsistenzquote Q3 und der Zählerwert Z3 größer als eine Schwelle S3 ist (siehe Figur 3). Falls ja, geht der Antriebsstrang in einem Schritt
- S11: in den Modus "Gang hochschalten". Falls nein, erfolgt ein Rücksprung in den Schritt S8.
Ist die Antwort auf die Abfrage S5 nein, so wird in einem Schritt
- S12: abgefragt, ob der Modus "Gang hochschalten" vorliegt. Falls ja, wird in einem Schritt
- S13: der nächsthöhere Gang eingelegt und ein Zählerwert Z5 inkrementiert. Danach wird in einem Schritt
- S14: abgefragt, ob sofortiges Bremsen erfolgt, da die Zeitspanne seit dem Hochschalten kleiner als t5 ist. Falls ja, wird in einem Schritt
- S15: ein Zählerwert Z6 inkrementiert und in einem Schritt
- S16: wird abgefragt, ob ein Zählerwert Z6 geteilt durch den Zählerwert Z5 größer als eine Konsistenzquote Q5 und der Zählerwert Z5 größer als eine Schwelle S5 ist. Falls nein, erfolgt ein Rücksprung in den Schritt S8. Falls ja, geht der Antriebsstrang in einem Schritt
- S17: in den Modus "Gang halten", und danach erfolgt ein Rücksprung in den Schritt S8.
Ist die Antwort auf die Abfrage S14 nein, wird in einem Schritt
- S18: abgefragt, ob sofort Gas zu geben ist, da die Zeitspanne seit dem Hochschalten kleiner als t6 ist. Falls nein, erfolgt ein Sprung zu dem Schritt S17. Falls ja, wird in einem Schritt
- S19: der Zählerwert Z6 dekrementiert, und in einem Schritt
- S20: wird abgefragt, ob der Zählerwert Z6 geteilt durch den Zählerwert Z5 kleiner ist als eine Konsistenzquote Q8 und der Zählerwert Z5 größer ist als eine Schwelle S6. Falls ja, wird in einem Schritt
- S21: in den Modus "Segeln" übergegangen. Falls nein, erfolgt ein Rücksprung in den Schritt S8.
Falls die Antwort auf die Abfrage S12 nein ist, wird in einem Schritt
- S22: (siehe Figur 2C) abgefragt, ob der Modus "Gang halten" vorliegt. Falls ja, wird in einem Schritt
- S23: der Gang gehalten und ein Zählerwert Z7 inkrementiert.
In einem Schritt
- S24: wird abgefragt, ob ein sofortiges Bremsen vorliegt, da die Zeitspanne seit dem Hochschalten kleiner ist als t7. Falls ja, wird in einem Schritt
- S25: ein Zählerwert Z8 inkrementiert und in einem Schritt
- S26: abgefragt, ob ein Zählerwert Z8 geteilt durch den Zählerwert Z7 größer ist als eine Konsistenzquote Q7 und der Zahlenwert Z7 größer ist als eine Schwelle S7. Falls nein, erfolgt ein Rücksprung in den Schritt S8. Falls ja, wird in einem Schritt
- S27: in den Modus "Regenerieren" übergegangen oder umgeschaltet und danach ein Rücksprung in den Schritt S8 ausgeführt. Falls die Antwort auf die Abfrage S24 nein ist, erfolgt in einem Schritt
- S28: eine Abfrage, ob ein sofortiges Gas geben vorliegt, da die Zeit seit dem Hochschalten kleiner als eine Zeitspane t8 ist. Falls nein, erfolgt ein Sprung zu dem Schritt S27. Falls ja, wird in einem Schritt
- S29: ein Zählerwert Z8 dekrementiert und in einem Schritt
- S30: abgefragt, ob der Zählerwert Z8 geteilt durch den Zählerwert Z7 kleiner ist als eine Konsistenzquote Q8 und der Zählerwert Z7 größer als eine Schwelle S8. Falls nein, erfolgt ein Rücksprung in den Schritt S8. Falls ja, wird in einem Schritt
- S31: in den Modus "Gang hochschalten" umgeschaltet und dann zu dem Schritt S8 zurück gesprungen.
Ist die Antwort auf die Abfrage S22 nein, so wird in einem Schritt
- S32: abgefragt, ob der Modus "Regenerieren" vorliegt (siehe Figur 2D). Falls nein, wird in einem Schritt
- S32*: ein Fehler erkannt. Falls ja, wird in einem Schritt
- S33: mit einer Regenerierungsstärke RS regeneriert und ein Zählerwert Z9 inkrementiert. In einem Schritt wird
- S34: abgefragt, ob ein sofortiges Bremsen vorliegt, da die Zeit seit dem Regenerieren kleiner als eine Zeitspane t9 ist. Falls ja, wird in einem Schritt
- S35: die Regenerierungsstärke RS wie folgt erhöht:
RS=RS+dRSa. Falls nein, wird in einem Schritt
- S36: abgefragt, ob ein sofortiges Gas geben vorliegt, da die Zeit seit dem sofortigen Gas geben kleiner als eine Zeitspane t10 ist. Falls nein, erfolgt ein Rücksprung in den Schritt S8. Falls ja, wird in einem Schritt
- S37: ein Zählerwert Z10 dekrementiert und die Regenerierungsstärke RS wie folgt erniedrigt: RS=RS-dRSb. In einem Schritt
- S38: wird abgefragt, ob die Regenerierungsstärke kleiner/gleich null ist oder ob der Zählerwert Z10 geteilt durch den Zählerwert Z8 kleiner ist als eine Konsistenzquote Q10 und der Zählerwert Z9 größer als eine Schwelle S10. Falls ja, wird in einem Schritt
- S39: in den Modus "Gang halten" umgeschaltet.

Nach dem Schritt S39 oder dem Schritt S32* ist ein Zyklus dieses Programms abgearbeitet, und danach kann ein neuer Programmzyklus durchlaufen werden.

Die Figur 3 enthält Tabellen mit Zahlenbeispielen von fünf verschiedenen Gruppen von Parametern und sonstigen Daten, die in dem Programm nach den Figuren 2 und 3 verwendet werden:
- Parameter t3 bis t10 für einen Initmodus "Segeln" des Antriebsstrangs;
- Werte von Konsistenzquoten Q3 bis Q10;
- Zahlenwerte der Konsistenzquote Q3 abhängig von Zählerwerten Z3;
- Schwellen (Schwellenwerte) S3 bis S10;
- Initwerte für eine Regenerierungsstärke RS = 1 kW.

Die Initwerte oder Initialwerte sind Variablen, die bei einem beim Start oder Neustart des Programms mit den aufgeführten Zahlen beschrieben werden.

Die Parameter t2, t3, t5 - t10 stellen Zeiten dar, die mathematisch exakt definieren, was man umgangssprachlich als "sofortiges Reagieren" bezeichnen würde. Damit wird festgestellt, ob der Fahrer auf eine Aktion des Fahrzeugs, wie z.B. "Motor aus" oder "starkes Verzögern" wegen starker Regeneration sofort reagiert. Dabei kann dem Fahrer nach einem "Motor aus" etwas mehr Reaktionszeit zugestanden werden als nach einem "starkes Verzögern", weil das "Motor aus" nicht so schnell wahrgenommen wird. In diesem Fall werden individuelle Zeiten für die Definition der verschiedenen Arten von "sofort" vorgegeben. In dem dargestellten Zahlenbeispiel werden diese aber der Einfachheit halber aber alle gleich gesetzt. Es handelt sich bei den Parametern t3, ... t10 also um Zeitspannen, die von dem Programm geprüft werden.

Mit den Konsistenzquoten Q3, Q5. ...Q10 wird folgendes erreicht: Einige IPM-Paramter oder -Modi können geändert werden, wenn sich der Fahrer konsistent auf eine Art und Weise verhält, die eine solche Änderung nahe legt. Erst wenn der Fahrer in zum Beispiel mindestens 90% der Fälle, in denen ein betrachtetes Ereignis auftritt, in einer analogen Weise reagiert, wird eine solche Änderung eines Parameters oder Modus vorgenommen. Diese "90 Prozent" werden als die geforderte Konsistenzquote definiert. Durch einen hohen Wert der Konsistenzquote (nahe 100%) wird ausgeschlossen, dass zufällige Fahreraktionen zu einer Änderung der IPM-Parameter oder -Modi führen. Durch einen nicht zu großen Wert der Konsistenzquote (spürbar unter 100%) wird die Forderung vermieden, dass der Fahrer in gleichen Fahrsituationen immer aufmerksam sein und immer identisch reagieren muss, da das in der Praxis wohl nie vorkommt.

Als Beispiel für ein "robuster machen" der Antriebsstrangsteuerung ist die Konsistenzquote Q3 abhängig von dem Zählerwert Z3 tabellarisch dargestellt. Je größer der Zählerwert Z3 wird, eine desto höhere Konsistenzquote Q3 fordert das Antriebsstrangmanagement. Die anderen Konsistenzquoten weisen ein gleiches oder ähnliches Verhalten auf.

Zusätzlich zu der Forderung, eine bestimmte Konsistenzquote zu erreichen, wird eine bestimmte Anzahl an Wiederholungen entsprechend den Schwellen S3, ... S10 der selben Aktion wie z.B. "Motor aus" gefordert, um überhaupt eine statistisch aussagekräftige Konsistenzquote Q3, ... Q10 errechnen zu können. Andernfalls wäre nach einer einzigen entsprechenden Fahreraktion schon die Quote 1/1 = 100% erreicht!

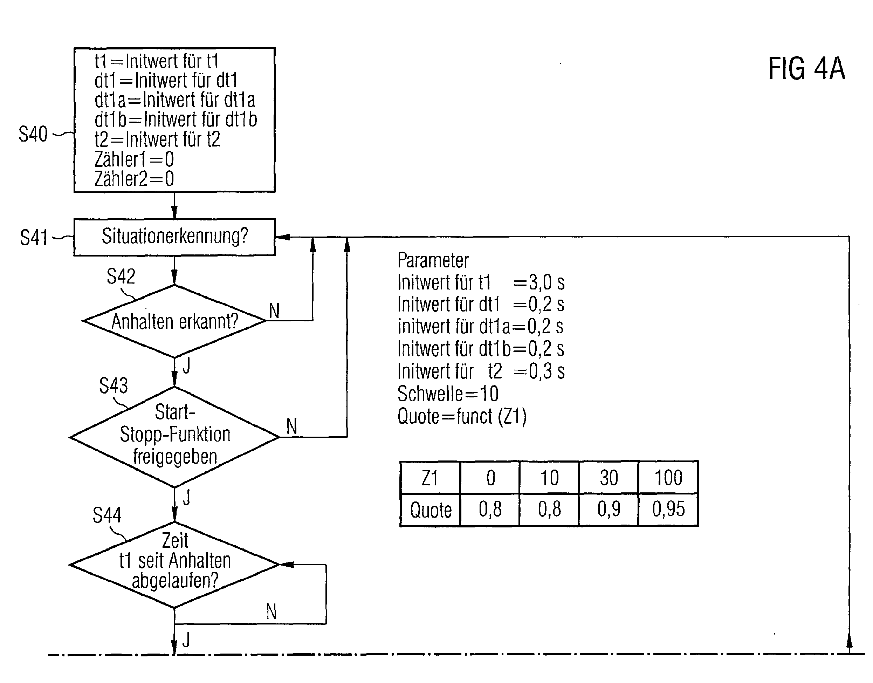

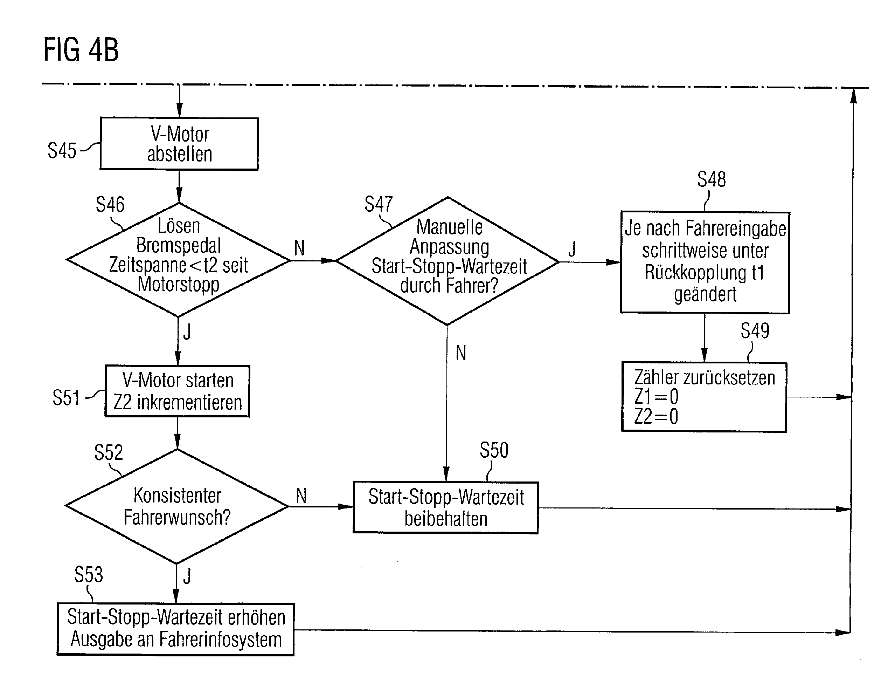

Das aus den Figuren 4A und 4B ersichtliche Ablaufdiagramm eines weiteren Programms (Algorithmus) für den Antriebsstrang wird in dem Antriebsstrangmanagement 12 als lernende Funktion "Start-Stopp" abgearbeitet. Das Programm umfasst folgende Schritte:
- S40: In einem Startschritt werden Initwerte für die Zeitspannen t1 und t2, für Zeitspannenänderungen dt1, dt1a und dt1b gesetzt sowie die Zählerwerte Z1 und Z2 gleich Null gesetzt. In einem Schritt
- S41: wird eine Erkennung der Fahrsituation durchgeführt. In einem Schritt
- S42: wird abgefragt, ob eine Situation Anhalten erkannt worden ist, wobei ein Stillstand des Kraftfahrzeugs und eine Betätigung der Bremse erfasst werden. Falls nein, erfolgt ein Rücksprung zu dem Schritt S41. Falls ja, wird in einem Schritt
- S43: abgefragt, ob eine Start-Stopp-Funktion über Kalibrationsparameter freigegeben wird. Falls nein, erfolgt ein Rücksprung zu dem Schritt S41. Falls ja, wird in einem Schritt
- S44: abgefragt, ob die Zeitspanne t1 seit dem Anhalten abgelaufen ist. Falls nein, wird diese Abfrage wiederholt. Falls ja, wird in einem Schritt
- S45: der Verbrennungsmotor abgestellt. In einem Schritt
- S46: wird abgefragt, ob das Bremspedal innerhalb einer Zeitspanne < t2 seit dem Motorstopp gelöst worden ist (siehe Figur 4B). Falls nein, wird in einem Schritt
- S47: abgefragt, ob eine manuelle Anpassung der Start-Stopp-Wartezeit durch den Fahrer stattgefunden hat. Falls ja, wird in einem Schritt
- S48: abhängig von Fahrereingaben schrittweise und unter Rückkopplung über das Fahrerinfosystem 20 die Zeit t1 wie folgt geändert
t1 erhöhen: t1 = t1 + dt1a
t1 reduzieren: t1 = t1 - dt1b.
Danach werden in einem Schritt
- S49: die Zählerwerte Z1 und Z2 auf null zurück gesetzt. Danach erfolgt ein Rücksprung zu dem Schritt S41.
Falls die Antwort auf die Abfrage S47 nein ist, wird in einem Schritt
- S50: die Start-Stopp-Wartezeit beibehalten und auf den Schritt S42 zurück gesprungen.
Falls die Antwort auf die Abfrage S46 ja ist, wird in einem Schritt
- S51: der Verbrennungsmotor gestartet und der Zählerwert Z2 inkrementiert. In einem Schritt
- S52: wird abgefragt, ob ein konsistenter Fahrerwunsch vorliegt, wobei der Zählerwert Z2 geteilt durch den Zählerwert Z1 größer ist als die Quote (=Kurzform für Konsistenzquote) und der Zählerwert Z1 größer als eine Schwelle ist. Falls nein, erfolgt ein Sprung zu dem Schritt S50. Falls ja, wird in einem Schritt
- S53: die Start-Stopp-Wartezeit erhöht: t1 = t1 + dt1, und es erfolgt eine Ausgabe der neuen Wartezeit t1 an das Fahrerinfosystem.

Damit ist ein Zyklus dieses Programms abgearbeitet und es erfolgt ein Rücksprung zu dem Schritt S41, wonach ein neuer Programmzyklus durchlaufen werden kann.

In Figur 4A sind folgende Zahlenwerte für Parameter und sonstige Daten, die von dem Programm verarbeitet werden, angegeben: Initwerte für t1, dt1, dt1a, dtib, t2 und Schwelle, sowie (Konsistenz)Quote als Funktion des Zählerwerts Z1. Die gleiche oder eine ähnliche Abhängigkeit kann für den Zählerwert Z3 vorgegeben werden. Auch hier gilt: Je größer der Zählerwert Z3 wird, eine desto höhere Konsistenzquote Q3 wird von dem Antriebsstrangmanagement gefordert.

## Patentansprüche

1. Verfahren zum Steuern des Antriebsstrangs (AS) eines Kraftfahrzeugs mit einem Antriebsstrangmanagement (12),
- das eine Schaltung (22) aufweist, in der Aktionen des Fahrers ausgewertet und als gewünschtes Verhalten des Antriebsstrangs erfasst und zusammen mit der jeweiligen Fahrsituation gespeichert werden, und
- das individuell an den Fahrer des Kraftfahrzeugs angepasst wird,
- wobei durch den Fahrer Daten, mit denen das Steuerverhalten des Antriebsstrangmanagements (12) an Fahrerwünsche angepasst wird, über eine Schnittstelle (18) eingebbar sind,
- wobei bei wiederholtem Auftreten des gleichen Fahrverhaltens in derselben Fahrsituation das Antriebsstrangmanagement an das durch die Daten vorgegebene Verhalten angepasst wird, und
- wobei, falls dasselbe oder ein zumindest ähnliches Fahrerverhalten häufig als Reaktion auf dieselben oder ähnliche Situationen (konsistentes Verhalten) beobachtet wird, das Antriebsstrangmanagement (12) eine Lernfunktion durchführt, wobei es zugehörige Parameter oder Zustandsdaten des Antriebsstrangs in Anpassung an das Fahrerverhalten verändert,
**dadurch gekennzeichnet, dass** das Fahrerverhalten immer eindeutiger und über eine höhere Konsistenzquote (Tabelle in Figur 4) auf einen Änderungswunsch hindeuten muss, bevor eine Rekonfiguration des Steuerverhaltens durchgeführt wird.

2. Verfahren nach Anspruch 1, **dadurch gekennzeichnet, dass** eine Start-Stopp-Automatik des Antriebsstrangs (AS) **dadurch** konfiguriert wird, dass die Zeit zwischen Fahrzeugstillstand und Stopp des Verbrennungsmotors gemäß dem individuellen Fahrverhalten als Parameter eingestellt wird.

3. Antriebsstrang (AS) eines Kraftfahrzeugs mit einem Antriebsstrangmanagement (12),
- das eine Schaltung (22) aufweist, in der Aktionen des Fahrers ausgewertet und als gewünschtes Verhalten des Antriebsstrangs erfasst und zusammen mit der jeweiligen Fahrsituation gespeichert werden, und
- das individuell an den Fahrer des Kraftfahrzeugs angepasst wird,
- wobei durch den Fahrer Daten, mit denen das Steuerverhalten des Antriebsstrangmanagements (12) an Fahrerwünsche angepasst wird, über eine Schnittstelle (18) eingebbar sind,
- wobei bei wiederholtem Auftreten des gleichen Fahrverhaltens in derselben Fahrsituation das Antriebsstrangmanagement an das durch die Daten vorgegebene Verhalten angepasst wird, und
- wobei, falls dasselbe oder ein zumindest ähnliches Fahrerverhalten häufig als Reaktion auf dieselben oder ähnliche Situationen (konsistentes Verhalten) beobachtet wird, das Antriebsstrangmanagement (12) eine Lernfunktion durchführt, wobei es zugehörige Parameter oder Zustandsdaten des Antriebsstrangs in Anpassung an das Fahrerverhalten verändert,
**dadurch gekennzeichnet, dass** das Fahrerverhalten immer eindeutiger und über eine höhere Konsistenzquote (Tabelle in Figur 4) auf einen Änderungswunsch hindeuten muss, bevor eine Rekonfiguration des Steuerverhaltens durchgeführt wird.

## Claims

1. Method for controlling the drive train (AS) of a motor vehicle with a drive train management system (12),
- that has a circuit (22) in which actions of the driver are evaluated and recorded as desired behaviour of the drive train and stored together with the particular driving situation, and
- that is individually adapted to the driver of the motor vehicle,
- whereby data by means of which the control behaviour of the drive train management system (12) is adapted to the driver's wishes can be entered by the driver via an interface (18),
- whereby in the event of a repeated occurrence of the same driving behaviour in the same driving situation the drive train management system is adapted to the behaviour specified by the data, and
- whereby if the same, or at least similar, driver behaviour is frequently observed as a reaction to the same or similar situations (consistent behaviour), the drive train management system (12) performs a learning function, whereby it changes associated parameters or status data of the drive train to adapt to the driver's behaviour,
**characterised in that** the driver's behaviour must always indicate an increasingly pronounced wish to change with a higher consistency quota (table in Fig. 4) before a reconfiguration of the control behaviour is carried out.

2. Method in accordance with claim 1, **characterised in that** an automatic start-stop of the drive train (AS) is configured in that the time between a vehicle standstill and the stopping of the combustion engine is set as a parameter in accordance with the individual driving behaviour.

3. Drive train (AS) of a motor vehicle with a drive train management system (12),
- that has a circuit (22) in which actions of the driver are evaluated and recorded as desired behaviour of the drive train and stored together with the particular driving situation, and
- that is individually adapted to the driver of the motor vehicle,
- whereby data by means of which the control behaviour of the drive train management system (12) is adapted to the driver's wishes can be entered by the driver via an interface (18),
- whereby in the event of a repeated occurrence of the same driving behaviour in the same driving situation the drive train management system is adapted to the behaviour specified by the data, and
- whereby if the same, or at least similar, driver behaviour is frequently observed as a reaction to the same or similar situations (consistent behaviour), the drive train management system (12) performs a learning function, whereby it changes associated parameters or status data of the drive train to adapt to the driver's behaviour,
**characterised in that** the driver's behaviour must always indicate an increasingly pronounced wish to change with a higher consistency quota (table in Fig. 4) before a reconfiguration of the control behaviour is carried out.

## Revendications

1. Procédé de commande de la ligne de transmission (AS) d'un véhicule à moteur, comportant un pilotage de la ligne de transmission (12),
- qui comporte un circuit (22) dans lequel des actions du conducteur sont analysées et sont détectées comme comportement souhaité de la ligne de transmission et sont mémorisées conjointement avec la situation de conduite, et
- qui est adapté individuellement au conducteur du véhicule,
- des données, par lesquelles le comportement de commande du pilotage de la ligne de transmission (12) est adapté aux intentions du conducteur, pouvant être entrées via une interface (18) par le conducteur,
- sachant que lorsque le même comportement de conduite se reproduit dans la même situation de conduite, le pilotage de la ligne de transmission est adapté au comportement prédéfini par les données et
- lorsque le même comportement du conducteur ou un comportement au moins similaire est fréquemment observé en réaction aux mêmes situations ou à des situations analogues (comportement consistant), le pilotage de la ligne de transmission (12) exécute une fonction d'auto-adaptation, les paramètres ou données d'état associées de la ligne de transmission étant modifiées en adaptation au comportement du conducteur,
**caractérisé en ce que** le comportement du conducteur doit être toujours plus clair et doit annoncer par l'intermédiaire d'un quota de consistance plus élevé (tableau sur la figure 4) une intention de changement, avant qu'une reconfiguration du comportement de commande soit effectuée.

2. Procédé selon la revendication 1, **caractérisé en ce que** un automatisme marche - arrêt de la ligne de transmission (AS) est configuré par le fait que l'intervalle de temps entre une immobilisation du véhicule et l'arrêt du moteur à combustion interne selon le comportement de conduite individuel est défini en tant que paramètre.

3. Ligne de transmission (AS) d'un véhicule à moteur, comportant un pilotage de la ligne de transmission (12),
- qui comporte un circuit (22) dans lequel des actions du conducteur sont analysées et sont détectées comme comportement souhaité de la ligne de transmission et sont mémorisées conjointement avec la situation de conduite, et
- qui est adapté individuellement au conducteur du véhicule,
- des données, par lesquelles le comportement de commande du pilotage de la ligne de transmission (12) est adapté aux intentions du conducteur, pouvant être entrées via une interface (18) par le conducteur,
- sachant que lorsque le même comportement de conduite se reproduit dans la même situation de conduite, le pilotage de la ligne de transmission est adapté au comportement prédéfini par les données et
- lorsque le même comportement du conducteur ou un comportement au moins similaire est fréquemment observé en réaction aux mêmes situations ou à des situations analogues (comportement consistant), le pilotage de la ligne de transmission (12) exécute une fonction d'auto-adaptation, les paramètres ou données d'état associées de la ligne de transmission étant modifiées en adaptation au comportement du conducteur,
**caractérisée en ce que** le comportement du conducteur doit être toujours plus clair et doit annoncer par l'intermédiaire d'un quota de consistance plus élevé (tableau sur la figure 4) une intention de changement, avant qu'une reconfiguration du comportement de commande soit effectuée.
